# FASCICULE DE BREVET EUROPEEN

(11) **EP 3 999 354 B1**
(45) Date de publication et mention de la délivrance du brevet: **13.08.2025**
(21) Numéro de dépôt: 20737488.5
(22) Date de dépôt: 15.07.2020
(51) Int. Cl.: B42D 25/36, B42D 25/373, B42D 25/318, B42D 25/324, G01N 23/20, G06K 19/14, G07D 7/00, G07D 7/06

(54) **OBJET ANTI-CONTREFAÇON**
FÄLSCHUNGSSICHERES OBJEKT
ANTI-COUNTERFEITING OBJECT

(30) Priorité: 18.07.2019 FR 1908174
(43) Date de publication de la demande: 25.05.2022
(73) Titulaire: CENTRE NATIONAL DE LA RECHERCHE SCIENTIFIQUE (CNRS), 75016 Paris (FR)
(72) Inventeur: KENZARI, Samuel, 54200 Andilly (FR); FOURNEE, Vincent, 54770 Laître-sous-Amance (FR); BOY, Bénédicte, 54000 Nancy (FR)
(74) Mandataire: Office Freylinger
(86) Numéro de dépôt international: PCT/EP2020/069936
(87) Numéro de publication internationale: WO 2021/009195

(56) Documents cités:
- WO-A1-2019/011986

## Description

### Domaine technique

La présente invention concerne généralement les domaines de l'identification et de l'authentification d'objets. Elle concerne plus particulièrement un objet anti-contrefaçon pouvant être authentifié de manière fiable.

### Etat de la technique

La contrefaçon est un problème dont l'ampleur ne cesse de croitre. Pour les entreprises, la contrefaçon est une nuisance en raison de son impact sur les ventes, la valeur de la marque et la réputation de l'entreprise, ainsi que sur leur capacité à tirer parti des innovations techniques. Les consommateurs sont également victimes de la contrefaçon, se retrouvant avec un produit non-authentique en dépit du prix qu'ils ont payé, et, s'agissant de produits tels que des pièces mécaniques ou des médicaments, présentant des risques importants pour la sécurité et la santé. Au niveau de l'État, la contrefaçon préoccupe les gouvernements en raison de la menace qu'elle fait peser sur le bien-être et la santé des consommateurs, de son impact négatif sur l'innovation et des ressources considérables consacrées aux réseaux criminels, à la criminalité organisée et à d'autres groupes qui perturbent et corrompent la société.

Il existe aujourd'hui une multitude de technologies pouvant être utilisées dans la lutte contre la contrefaçon. Par exemple, les nanotechnologies et d'autres technologies de pointe ouvrent la voie à de nouvelles méthodes de protection des marques, de suivi et de traçage des produits: elles offrent le potentiel d'une «empreinte digitale» unique du produit réel (sans l'affecter), ainsi que de l'emballage. A cet égard, le rapport "Nano and other Innovative Anti-Counterfeit Technologies" publié par le Technology Transfer Centre en avril 2016, décrit plus de 40 solutions, la plupart développées dans la période 2014 et 2016.

Les options technologiques actuelles en matière de lutte contre la contrefaçon comprennent une gamme de mesures dites « ouvertes » et « dissimulées » qui incluent l'authentification et la sécurité des produits. Le marché de la lutte contre la contrefaçon peut être principalement divisé en deux segments, à savoir les technologies d'authentification (les technologies fournissant des fonctions de sécurité apparentes et secrètes), et les *« Track & Trace Technologies »* qui sont des technologies facilitant la visibilité des produits tout au long de la chaîne d'approvisionnement.

Ces options technologiques emploient les numéros de série, les codes à barres, les systèmes de données et les identificateurs RFID pour l'identification, ainsi que les hologrammes, les solutions biométriques, les filigranes et les étiquettes pour la sécurité. Ces technologies ont leurs propres limites à différents niveaux et ne sont pas infaillibles.

Un des défis particuliers des mesures anti-contrefaçon est la difficulté d'empêcher la copie du dispositif RFID, du marqueur, de l'hologramme ou de toute autre empreinte d'authentification.

Le document US 2007/0121181 décrit un procédé de marquage et d'identification d'un article basé sur une analyse par diffraction des rayons X (DRX). Le procédé utilise un élément d'identification formé de matériaux cristallins en poudre dans un liant pour fournir un diagramme de diffraction de rayons X représentant la signature de l'élément lorsqu'il est éclairé par un faisceau de rayons X. Le diagramme de diffraction de rayons X représente un code, qui est déterminé par la sélection et l'omission d'un ou de plusieurs des quatre matériaux cristallins différents. Cet élément d'identification peut prendre diverses formes (perles, cylindres, fibres) et peut être utilisé à diverses fins, telles que le tri, le suivi, l'identification, la vérification, l'authentification, la protection antivol ou anti-contrefaçon, la sécurité ou la lutte contre le terrorisme, etc.

La méthode proposée est intéressante car elle autorise un grand nombre de codes distincts et utilise des objets de petite taille. En outre, la signature DRX est lisible indépendamment de l'orientation et peut résister aux environnements difficiles. Malgré ces avantages, le procédé décrit dans le document US 2007/0121181 ne semble pas suffisamment sûr. En effet, la diffraction par rayons X est un moyen classique d'analyse des matériaux cristallins. Il serait relativement facile pour un homme de l'art d'analyser un tel élément d'identification pour détecter les différents matériaux cristallins et reproduire un composé avec un diffractogramme très similaire ou identique.

D'autres méthodes d'authentification d'objets sont, par exemple, décrites dans les documents WO 2012/174232, US 2005/0112360, US 2007/0071951 ou dans l'article "Méthode anti-contrefaçon utilisant des marqueurs de cellulose nanocristalline synthétisée", par Yu Ping Zhang, 21 novembre 2012, thèse de doctorat, Université McGill, Montréal.

Le WO2019/011986 présente un procédé d'authentification utilisant la radiocristallographie, qui est plus sûr que celui décrit dans le US 2007/0121181. Ce procédé utilise une matière d'authentification qui comprend au moins une phase amorphe, au moins une phase cristalline et au moins une phase métallique complexe. En effet, une telle substance d'authentification produit, par l'analyse de cristallographie aux rayons X, un diagramme de diffraction unique, formant une signature unique, ou empreinte, et sa composition ne peut pas être déterminée après fabrication de la substance. La force de cette approche réside dans l'impossibilité de remonter, par les méthodes d'analyse, à la recette de fabrication de la substance d'authentification. L'authentification se fait donc par comparaison à un diffractogramme de référence.

En pratique, on prépare un lot (batch) de la substance d'authentification et on la met en forme, par exemple, de billes, cylindres, fibres, ou encore sous forme d'étiquette, badge ou autre moyen de marquage, qui va être associé à un objet dans le but de l'authentifier. Il est également possible d'incorporer la substance d'authentification à l'objet, en fabriquant l'objet intégralement ou partiellement dans la substance d'authentification, ou un composant de l'objet est fabriqué dans la substance d'authentification.

Il sera alors possible d'authentifier l'objet en analysant l'étiquette réalisée dans la matière d'authentification, ou une partie de l'objet réalisé dans la matière d'authentification.

Cette méthode est très intéressante par son caractère inviolable, en raison de l'impossibilité de remonter, par les méthodes d'analyse, à la recette de fabrication de la substance d'authentification. Néanmoins, elle demande une grande rigueur lors de la fabrication du lot, afin de maintenir l'homogénéité dans celui-ci, et donc de garantir une signature identique pour l'ensemble des produits fabriqués à partir du lot. En outre, la méthode d'analyse par rayons X est par nature une méthode dissimulée, et il n'est pas toujours évident de savoir que l'objet est un objet anti-contrefaçon. Enfin, il est nécessaire de maintenir une base de données avec les signatures DRX de référence.

Le WO 2019/011986 ne décrit notamment pas l'utilisation de deux filaments pour construire le volume d'authentification.

### Objet de l'invention

La présente invention a pour objet de proposer un autre concept d'objet anti-contrefaçon pouvant être authentifié par diffraction des rayons X, qui ne présente pas les désavantages susmentionnés.

### Description générale de l'invention

Selon un premier aspect, la présente invention propose un objet anti-contrefaçon selon la revendication 1, comprenant une face avec un marquage d'identification optique lisible à l'œil et/ou par une machine, ainsi qu'un volume d'authentification, le volume d'authentification s'étendant depuis la surface de l'objet, depuis la même face ou une autre face de l'objet, dans la direction de l'épaisseur de l'objet (ou profondeur - par rapport à la face) de sorte à être accessible pour une lecture par diffractométrie de rayons X (notée DRX). Le volume d'authentification comprend un mélange non miscible d'une première matière, dite matière d'authentification, et d'au moins une deuxième matière possédant une signature DRX propre, différente de celle de la première matière. La matière d'authentification comprend : au moins une phase amorphe, au moins une phase cristalline et au moins une phase métallique complexe. Le volume d'authentification a une signature DRX résultant de la combinaison des émissions des deux matières. Le volume d'authentification combine les première et deuxième matières, de manière non-miscible, et résulte de l'association, juxtaposition et/ou superposition des première et deuxième matières, apportées de manière séparée par construction additive utilisant un filament de la matière d'authentification et un filament de la deuxième matière. Le marquage d'identification indique la zone d'authentification ou comprend des informations relatives à la position du volume d'authentification dans l'objet.

Le terme « volume d'authentification » désigne un volume du corps de l'objet, qui peut prendre des formes diverses, le corps ayant une surface extérieure qui comprend la face portant le marquage d'indentification et à partir de laquelle s'étend le volume d'authentification. Le volume d'authentification peut se situer sous la face qui porte le marquage d'indentification, ou sous une autre face.

Le volume d'authentification a un volume prédéterminé qui est déterminé selon la sensibilité de la technique DRX choisie, et pour un temps d'enregistrement entre une ou quelques heures, jusqu'à un à deux jours. Le volume d'authentification représente donc un volume minimum de matière continue de l'objet qui combine la première et la deuxième matière de sorte à permettre la détection par la méthode DRX choisie. De préférence, le volume prédéfini est d'au moins 5 mm³, en particulier au moins 10 mm³.

La présente invention vient compléter les mesures de lutte anti-contrefaçon en proposant une approche qui associe, à l'objet à authentifier, un marquage d'identification optique et un volume d'authentification. La zone d'identification est destinée à être lue par un moyen de lecture optique (généralement automatisée), et est normalement visible en regardant l'objet. Alors que la zone d'identification est à la surface de l'objet, le volume d'authentification s'étend dans le volume du corps de l'objet, et requiert une analyse par rayons X sur un volume donné de matière.

Comme le volume d'authentification n'est pas nécessairement visible/discernable à l'œil, et ne s'étend pas nécessairement dans tout l'objet, le volume d'authentification peut être repéré par un marquage, qui indique donc la zone d'authentification où réaliser l'analyse par DRX. Il peut s'agir d'un marquage spécifique, destiné uniquement à repérer la zone d'authentification. Mais on pourra avantageusement positionner les zones d'identification et d'authentification à proximité l'une de l'autre (juxtaposition), et même les superposer partiellement ou entièrement, auquel cas le marquage d'identification fait aussi fonction de marquage indicateur de la zone d'authentification. Dans le cas de la superposition (au moins partielle), la mesure de la signature DRX se fait donc à partir de la face portant le marquage d'identification.

On appréciera que l'authentification repose sur la combinaison de la matière d'authentification avec une deuxième matière, ce qui génère une signature DRX résultant de la combinaison des émissions des deux matières. La signature propre de la deuxième matière vient en effet se combiner à celle de la première matière, pour donner une signature DRX composite, fonction de la distribution de la matière d'authentification dans le volume d'authentification analysé, notamment sa quantité et sa position spatiale (en x, y et z). En effet, l'analyse DRX étant sensible sur une certaine profondeur (typiquement de l'ordre du millimètre), il est possible de jouer sur la distribution selon l'axe Z (profondeur) pour définir et moduler la signature DRX du volume d'authentification.

L'objet selon l'invention constitue donc un objet qui peut être qualifié de « anti-contrefaçon » par rapport à son usage, et qui est lui-même « anti-copie », car on ne peut le reproduire.

De préférence, le volume d'authentification s'étend, depuis la face avec le marquage d'identification sur une profondeur entre 0 et 1,5 mm, préférablement entre 0 et 1 mm, de manière plus préférée entre 0 et 600 µm, ou encore 0 à 400 µm.

La matière d'authentification peut être présente en surface et/ou distribuée en profondeur.

Selon des variantes, le volume d'authentification s'étend sur une surface, prise dans un plan sensiblement parallèle à ladite face de l'objet, d'au moins 10 mm², de préférence au moins 100 mm².

Par facilité de langage, dans le présent texte, on utilise le terme « matière » comme synonyme de matériau.

Dans le présent texte, le terme « signature DRX » se réfère à au moins une partie du diffractogramme (diagramme de diffraction de rayons X) correspondant à un échantillon donné (de référence ou candidat), et qui contient les valeurs caractéristiques de l'analyse DRX. La signature DRX peut, de manière générale, être représentée graphiquement ou comme un ensemble de données. Par ailleurs, l'authentification peut se faire sur l'ensemble du diffractogramme, ou sur une ou plusieurs parties de celui-ci. En pratique, la signature DRX comprend un ensemble de couples caractéristiques du diffractogramme (angle ; intensité), représentatifs de l'échantillon analysé.

Le marquage d'identification peut prendre une variété de formes, peut être lisible sous la lumière visible ou sous une lumière prédéfinie (ex. infrarouge). Le marquage d'identification peut comprendre des chiffres et/ou lettres, représentant un code ou non, ou tous types d'indices représentant un code, par ex. des barres, points, ronds, carrés, etc. On peut notamment employer les codes mono ou bidimensionnel, des codes du type : code à barres, QR code, codes matriciel, code circulaire (par ex. type « bleam »), etc. Le marquage d'identification représente des informations qui peuvent être de natures différentes, notamment des informations relatives à la nature de l'objet, par exemple son nom, référence fabriquant, données réglementaires etc, ainsi que leurs combinaisons.

Selon les variantes, le marquage d'identification optique est réalisé à partir des deux matériaux, chacun ayant une couleur différente.

Selon les variantes, le marquage d'identification est un marquage matriciel bicolore, une couche de surface étant réalisée à partir de la première et deuxième matière, chacune ayant une couleur différente.

Selon les variantes, le marquage d'identification comprend une série de marques représentatives d'un code délimitées par une ligne périphérique, le volume d'authentification se trouvant à l'intérieur du contour de cette ligne périphérique.

L'authentification de l'objet se fait par comparaison entre la signature DRX mesurée et une signature DRX de référence, de manière automatisée ou assistée, sur base des graphes et/ou des valeurs numériques. En général, on considère que les signatures DRX mesurées et de référence correspondent lorsque les positions angulaires et intensités sont identiques ou similaires (dans un seuil de tolérance défini). Ainsi, la comparaison des signatures DRX implique principalement une comparaison des positions angulaires des pics caractéristiques/représentatifs et/ou une comparaison des intensités relatives des pics caractéristiques/représentatifs.

La signature DRX de référence peut être stockée, par ex. dans une base de données, de manière locale ou en ligne. Il est bien entendu possible de garder un échantillon témoin, à partir duquel on peut mesurer la signature DRX de référence.

De manière remarquable, le marquage d'identification optique peut comprendre des informations relatives à la signature DRX qui doit être obtenue lorsque le volume d'authentification est soumis à l'analyse DRX. L'authenticité de l'objet est alors vérifiée en comparant la signature DRX mesurée pour le volume d'authentification à la signature DRX encodée dans le marquage d'information.

Un avantage important de cette approche est donc qu'une signature DRX de référence est encodée dans le marquage d'identification, et qu'il n'est pas nécessaire d'accéder à une base de données en ligne, ni même de la maintenir, pour obtenir la signature DRX de référence.

On notera ici que dans le cas où le volume d'authentification est espacé du marquage d'identification, par exemple si le volume d'authentification se trouve sous une autre face que la face portant le marquage d'identification, il est possible d'encoder dans le marquage d'identification des informations relative à la position du volume d'authentification dans l'objet, donc par exemple des coordonnées de mesure pour effectuer l'analyse DRX, indiquant l'emplacement de la zone de mesure.

Par ailleurs, alors que l'usage de DRX relève des méthodes dites dissimulées de lutte contre la contrefaçon (comme dans le WO 2019/011986), la présente invention propose une approche combinant une identification optique et une authentification DRX, dans laquelle la zone d'authentification est préférablement marquée de sorte que l'on sait à quel endroit réaliser la mesure DRX. Cela est donc particulièrement intéressant car la quantité de matière d'authentification peut être est réduite à celle nécessaire à l'authentification.

On rappelle que la matière d'authentification utilisée dans l'invention, similaire à celle décrite dans le WO2019/011986, produit un diffractogramme de rayons X unique, constituant une signature unique. Sa composition ne peut pas être déterminée après fabrication. Les techniques d'analyse actuelles ne permettent pas l'analyse qualitative et quantitative des matériaux individuels constituant la matière d'authentification. En particulier, l'analyse chimique ne permet pas de décrypter une composition à laquelle correspond un diffractogramme donné. L'analyse élémentaire est réalisée sans distinction des différentes structures et phases cristallines en présence. L'analyse DRX est également incapable de déterminer la composition de la matière d'authentification, car elle ne donne pas accès aux fractions volumiques des différentes phases.

En raison du phénomène d'absorption des rayons X et du chevauchement des pics de diffraction des différentes phases cristallines et complexes des alliages métalliques, il est impossible de déterminer avec précision les fractions volumiques des différentes phases comprises dans le volume d'authentification.

L'invention permet encore un gain de matière, car, contrairement au WO 2019/011986, la signature DRX résulte d'une combinaison entre la matière d'authentification et la deuxième matière, qui peut être quelconque et surtout ne contient pas la combinaison spécifique de phases de la matière d'authentification. La deuxième matière peut donc être moins onéreuse tant sur le plan du coût d'achat que de sa mise en œuvre. Cela est particulièrement intéressant car on peut faire varier la signature DRX composite en variant le ratio entre les deux matières. Dans des variantes la deuxième matière est présente de manière prépondérante, formant dans certains cas une matrice, mais dans d'autres variantes on peut avoir une prépondérance de la matière d'authentification.

En principe, la deuxième matière peut être quelconque, polymère, bois, fibre, métal, etc. De manière générale, la deuxième matière a une signature DRX propre qui est différente de celle de la matière d'authentification. La deuxième matière est préférablement à base polymère, par exemple mono ou bi-composant, composite chargé, élastomère, silicone, etc. La deuxième matière pourrait être elle-même un matériau anti-copie. On pourra également réaliser l'invention avec plus d'une deuxième matière, respectant le même critère de signature DRX différente de la matière d'authentification.

Les volumes respectifs et agencements dans l'espace (dans le volume d'authentification) des première et deuxième matière peuvent être variés à dessin, selon les signatures que l'on souhaite construire. On peut avoir entre 1 et 99% de matière d'authentification dans le volume d'authentification, le reste étant complété par la première matière. Le volume d'authentification contient de préférence au moins 10% de matière d'authentification.

La forme de l'objet n'est limitée que par le volume minimal requis pour l'analyse DRX. Il peut prendre toutes sortes de formes. Il est possible de fabriquer des objets de grandes dimensions. Mais l'invention est particulièrement bien adaptée à la réalisation de l'objet sous forme d'étiquette, plaque, timbre, lamelle, panneau, vignette, timbre, badge, etc.

L'objet peut être conçu de sorte que le volume d'authentification soit présent, de manière uniforme, dans l'ensemble de son volume, ou seulement sur une partie de celui-ci. Dans ce dernier cas le volume d'authentification est contigu à, et/ou (partiellement) superposé avec, la zone d'identification. Par superposé, on entend ici que le volume d'authentification, vu selon la direction de l'épaisseur, se situe au moins partiellement en dessous de la zone d'identification (resp. des signes du marquage d'identification).

Selon les variantes, le marquage d'identification optique et le volume d'authentification se superposent au moins partiellement (vu dans la direction de l'épaisseur).

Dans certaines applications, le volume authentification peut être rapporté sur/dans une pièce support, l'assemblage des deux formant l'objet anti-contrefaçon.

L'objet anti-contrefaçon selon l'invention peut être fabriqué par toute technologie appropriée.

En général, les première et deuxième matières sont préparées indépendamment l'une de l'autre. Elles sont ensuite combinées pour réaliser une pièce entière ou une partie de pièce, et donc en particulier pour former le volume d'authentification. Les première et deuxième matières sont ainsi combinées dans le volume d'authentification, en les associant et/ou juxtaposant et/ou superposant, afin d'obtenir une distribution dans l'espace à l'intérieur du volume. Cette distribution dans l'espace détermine la signature composite du volume d'authentification.

Les première et deuxième matières sont apportées de manière indépendante simultanément ou successivement pour former cette combinaison dans le volume d'authentification (avec une distribution spatiale donnée), par construction additive à partir de deux fils différents, l'un avec la première matière et l'autre avec la seconde matière.

Les techniques de fabrication additive ont un intérêt particulier pour leur flexibilité et facilité de mise en œuvre. En outre, elles permettent un contrôle très précis du dépôt de matière, et donc de maîtriser, couche par couche, le dépôt de matière. L'impression 3D permet donc de maitriser à souhait la combinaison entre la matière d'authentification et la deuxième matière (ou d'autres matières), dans le plan de la couche mais également en profondeur. La technique du modelage par dépôt de matière en fusion (FDM) est particulièrement intéressante à mettre en œuvre avec deux (ou plus) filaments différents, dont l'un contient la matière d'authentification.

A ce titre on notera qu'il est possible de fabriquer des fils de matière d'authentification présentant une très bonne homogénéité.

Selon les variantes, l'objet est constitué d'une pluralité de couches superposées formées par impression 3D, au moins une des couches situées à une profondeur entre 0 et 0,6 mm de la surface comprenant au moins en partie de la matière d'authentification.

Comme il est clair pour l'homme du métier, on utilisera avantageusement des techniques de caractérisation X similaires (notamment les mêmes sources de rayonnements X) afin de pouvoir comparer les diffractogrammes de différents objets.

Dans le présent texte, le terme « phase amorphe » est employé dans son sens conventionnel, désignant généralement des agencements structurels tridimensionnels non périodiques, ne présentant pas la régularité à longue distance qui est caractéristique des cristaux. Typiquement, dans une phase amorphe, les rayons X vont être diffusés dans une pluralité de directions, ce qui se traduit par des pics larges mal définis.

Dans le présent texte, le terme « phase cristalline » est utilisé dans son sens conventionnel en cristallographie, désignant une structure cristalline, c'est-à-dire un agencement ordonné d'atomes, ions, molécules, formant un motif symétrique qui se répète périodiquement selon les directions principales de l'espace tridimensionnel de la matière. Dans le présent texte, le terme « phase cristalline » couvre ainsi la définition historique des cristaux mais ne couvre pas les « quasi-cristaux » ou plus généralement les « alliages métalliques complexes », définis ci-dessous. Les phases cristallines ont un diffractogramme caractérisé par un ensemble de pics discrets et intenses.

Dans le présent texte, le terme « alliage métallique complexe » s'entend d'un alliage qui est soit une phase quasi-cristalline au sens strict, soit une phase approximante. Les phases quasi-cristallines au sens strict sont des phases présentant des symétries de rotation normalement incompatibles avec la symétrie de translation, c'est-à-dire des symétries d'axe de rotation d'ordre 5, 8, 10 ou 12. A titre d'exemple, on peut citer la phase icosaédrique présentant une symétrie de groupe icosaédrique et la phase décagonale présentant une symétrie de groupe décagonale.

Les phases approximantes ou composés approximants sont des cristaux vrais dans la mesure où leur structure cristallographique reste compatible avec la symétrie de translation, mais qui présentent, dans le cliché de diffraction d'électrons, des figures de diffraction dont la symétrie est proche d'une symétrie d'ordre 5, 8, 10 ou 12. Ce sont des phases caractérisées par une maille élémentaire contenant plusieurs dizaines, voire plusieurs centaines d'atomes, et dont l'ordre local présente des arrangements de symétrie presque icosaédrique ou décagonale similaire aux phases quasi-cristallines parentes. Les phases métalliques complexes ont un diffractogramme de poudres caractérisé par un ensemble dense de pics discrets et intenses, nettement plus complexe que des alliages métalliques classiques.

Parmi ces phases, on peut citer à titre d'exemple la phase orthorhombique O₁ caractéristique d'un alliage ayant la composition atomique Al₆₅Cu₂₀Fe₁₀Cr₅, dont les paramètres de maille en nm sont : a₀⁽¹⁾=2,366, b₀⁽¹⁾=1,267, c₀⁽¹⁾=3,252. Cette phase orthorhombique O₁ est dite approximante de la phase décagonale. La nature des deux phases peut être identifiée par microscopie électronique en transmission.

On peut également citer la phase rhomboédrique de paramètres a_{R}=3,208 nm, α=36°, présente dans les alliages de composition atomique voisine de Al₆₄Cu₂₄Fe₁₂. Cette phase est une phase approximante de la phase icosaédrique.

On peut aussi citer des phases O₂ et O₃ orthorhombiques de paramètres respectifs en nm a₀⁽²⁾=3,83, b₀⁽²⁾=0,41, c₀⁽²⁾=5,26; et a₀⁽³⁾=3,25, b₀⁽³⁾=0.41, c₀⁽³⁾=9,8, présentes dans un alliage de composition atomique Al₆₃Cu_{17.5}CO_{17.5}Si₂ ; ou encore la phase orthorhombique O₄ de paramètres en nm a₀⁽⁴⁾=1,46, b₀⁽⁴⁾=1,23, c₀⁽⁴⁾=1,24, qui se forme dans l'alliage dont la composition atomique est Al₆₃Cu₈Fe₁₂Cr₁₇.

On peut encore citer une phase C, de structure cubique, très souvent observée en coexistence avec les phases approximantes ou quasi-cristallines vraies. Cette phase, qui se forme dans certains alliages Al-Cu-Fe et Al-Cu-Fe-Cr, consiste en une surstructure, par effet d'ordre chimique des éléments d'alliage par rapport aux sites d'aluminium, d'une phase de structure type Cs-CI et de paramètre de réseau a₁ = 0,297 nm. Un diagramme de diffraction de cette phase cubique a été publié pour un échantillon de phase cubique pure et de composition atomique Al₆₅Cu₂₀Fe₁₅ en nombre d'atomes.

On peut aussi citer une phase H de structure hexagonale qui dérive directement de la phase C comme le démontrent les relations d'épitaxie observées par microscopie électronique entre cristaux des phases C et H et les relations simples qui relient les paramètres des réseaux cristallins, à savoir aH=3√a1/√3 (à 4,5% près) and cH=3√2·a₁/2 (à 2,5% près). Cette phase est isotype d'une phase hexagonale, notée ΦAlMn, découverte dans des alliages Al-Mn contenant 40% en poids de Mn.

La phase cubique, ses surstructures et les phases qui en dérivent, constituent une classe de phases approximantes des phases quasi-cristallines de compositions voisines.

Les alliages quasi-cristallins du système Al-Cu-Fe sont également appropriés pour la mise en œuvre de la présente invention. On peut citer en particulier les alliages qui ont l'une des compositions atomiques suivantes : Al₆₂Cu_{25.5}Fe_{12.5}, Al₅₉Cu_{25.5}Fe_{12.5}B₃, Al₇₁Cu_{9.7}Fe_{8.7}Cr_{10.6}, et Al_{71.3}Fe_{8.1}Co_{12.8}Cr_{7.8}. Ces alliages sont par exemple commercialisés par la société Saint-Gobain (ou encore Sigma-Aldrich). En particulier, l'alliage Al₅₉Cu_{25.5}Fe_{12.5}B₃ est commercialisé sous la dénomination Cristome F1, l'alliage Al₇₁Cu_{9.7}Fe_{8.7}Cr_{10.6} est commercialisé sous la dénomination Cristome A1, et l'alliage Al_{71.3}Fe_{8.1}Co_{12.8}Cr_{7.8} est commercialisé sous la dénomination Cristome BT1.

Les alliages Cristome A1, F1 et BT1 sont cités uniquement à titre d'exemple.

Les alliages métalliques complexes utilisables dans le cadre de l'invention peuvent être des alliages métalliques comprenant un pourcentage atomique d'aluminium supérieur à 50%.

Selon un autre aspect, l'invention concerne un procédé de fabrication d'un objet anti-contrefaçon, dans lequel ledit objet est réalisé par construction additive utilisant : un filament de matière d'authentification comprenant au moins une phase amorphe, au moins une phase cristalline et au moins une phase métallique complexe ; et au moins un filament à base polymère de couleur différente. La fabrication est réalisée par impression de couches successives superposées. La couche de surface est imprimée de sorte à former un marquage d'identification. Le procédé est mis en œuvre de sorte que la matière du filament de matière d'authentification est déposée dans la couche de surface et/ou dans une ou plusieurs couches sous la couche de surface de sorte à former un volume d'authentification, de sorte que le volume d'authentification présente une signature DRX résultant de la combinaison des émissions des deux matières, dans lequel le marquage d'identification indique la zone d'authentification ou comprend des informations relatives à la position du volume d'authentification dans l'objet.

Selon un autre aspect, l'invention concerne un procédé d'authentification d'un objet anti-contrefaçon tel que divulgué dans la présente demande, comprenant les étapes suivantes :
lecture du marquage d'identification de l'objet anti-contrefaçon par un instrument de lecture afin d'obtenir des informations ;
analyse par diffraction de rayons X, DRX, de la zone d'authentification de l'objet anti-contrefaçon afin de déterminer sa signature DRX ; et
comparaison de la signature DRX de l'objet anti-contrefaçon avec une signature DRX de référence.

Le marquage d'identification prend typiquement la forme d'un code mono ou bidimensionnel. Sa lecture se fait avantageusement de manière automatisée au moyen d'un lecteur.

La comparaison des signatures DRX est préférablement assistée par ordinateur.

La signature DRX de référence peut être obtenue en accédant à un fichier ou une base de données en local ou en ligne. Dans ce cas le marquage d'identification peut comprendre l'adresse, url ou hyperlien permettant d'accéder à la signature DRX.

Alternativement, des informations relatives à la signature DRX de référence peuvent être encodées dans le marquage d'identification. Il s'agit d'informations relatives au diffractogramme correspondant à la signature DRX de référence, par exemple des pics caractéristiques repérés par les couples (angle, intensité), éventuellement complété par l'indication de la longueur d'onde de la source de Rayons X.

Selon encore un autre aspect, l'invention concerne un procédé de fabrication d'un objet anti-contrefaçon selon la revendication 14.

### Description détaillée à l'aide des figures

D'autres particularités et caractéristiques de l'invention ressortiront de la description détaillée d'au moins un mode de réalisation avantageux présenté ci-dessous, à titre d'illustration, en se référant aux dessins annexés. Ceux-ci montrent :
[Fig. 1] : un diffractogramme DRX correspondant à l'exemple 1 ;
[Fig. 2] : une vue de deux QR codes identiques selon l'exemple 2-A ;
[Fig. 3] : un diffractogramme DRX correspondant à l'exemple 2-A ;
[Fig. 4] : une vue de deux QR codes selon l'exemple 2-B ;
[Fig. 5] : un diffractogramme DRX correspondant à l'exemple 2-B ;
[Fig. 6] : une vue de deux QR codes selon l'exemple 3-A ;
[Fig. 7] : un diffractogramme DRX correspondant à l'exemple 3-A ;
[Fig. 8] : un diffractogramme DRX correspondant à l'exemple 3-B ;
[Fig. 9] : un diffractogramme DRX correspondant à l'exemple 4 ;
[Fig. 10] : un mode de réalisation de l'invention sous forme d'étiquette à QR code ;
[Fig. 11] : un mode de réalisation de l'invention sous forme d'étiquette portant un code barre ;
[Fig. 12] : un mode de réalisation de l'invention sous forme d'étiquette ; et [Fig. 13] : un mode de réalisation de l'invention sous forme de pion portant un code circulaire ;
[Fig. 14] : un diffractogramme DRX correspondant à l'exemple 5 .

### A) Exemples

Plusieurs exemples ont été réalisés afin d'illustrer le principe de l'invention. Les exemples 1 à 3 font appel à des étiquettes ou pastilles présentant un motif type QR code. Ces pastilles sont réalisées à l'aide d'une imprimante 3D conventionnelle de type FDM et utilisant deux filaments de diamètre 1,75 mm. Un des filaments est la matière d'authentification (matériau comprenant au moins une phase amorphe, au moins une phase cristalline et au moins une phase métallique complexe) et l'autre filament est à base polymère qui présente une signature DRX propre différente de l'autre filament, par exemple du PLA (acide polylactique).

Les mesures DRX ont été réalisées sur un appareil D8 Advance de la marque Bruker, en configuration theta/2theta Bragg Brentano, avec tube à rayons X à anode en cuivre. La mesure est réalisée sur un domaine angulaire de 15 à 90°, avec un pas de mesure de 0,018627795°, pour une durée totale de scan de 55min 50 s.

### • Exemple 1

Pour cet exemple, il s'agit de produire, par dépôt de filament (FDM), des échantillons sous forme de « pastilles » de 1 mm d'épaisseur et de diamètre 25 mm, soit 10 couches successives d'épaisseur 100 µm. Pour cela, deux fils sont utilisés, correspondant à deux matériaux différents : l'un est le matériau d'authentification, l'autre est un PLA conventionnel. Le filament de matériau d'authentification comprend ici : 50 m% d'une phase amorphe donnée par le PLA, 25 m% d'une phase cristalline, et 25 m% d'un mélange de phase icosaédrique quasicristalline et d'une phase approximante. Les alliages approximants et complexes sont des alliages du système Al-Cu-Fe avec les éléments d'addition appropriés (chrome ou bore, tel qu'expliqué plus haut).

Un premier échantillon témoin est produit, constitué de 10 couches de PLA.

Puis 9 autres échantillons sont produits, dans lesquels on dépose 9 couches de PLA, ainsi qu'une unique couche constituée à 100% de matériau d'authentification. Pour ces 9 échantillons précédemment décrits, on fait varier la position de la couche à 100% de matériau d'authentification, de la première couche (couche du dessus de la pastille), à la dixième et dernière couche (couche du dessous de la pastille). Tous les échantillons sont ensuite analysés (analyse par la face du dessus) par méthode DRX pour en obtenir leur signature caractéristique.

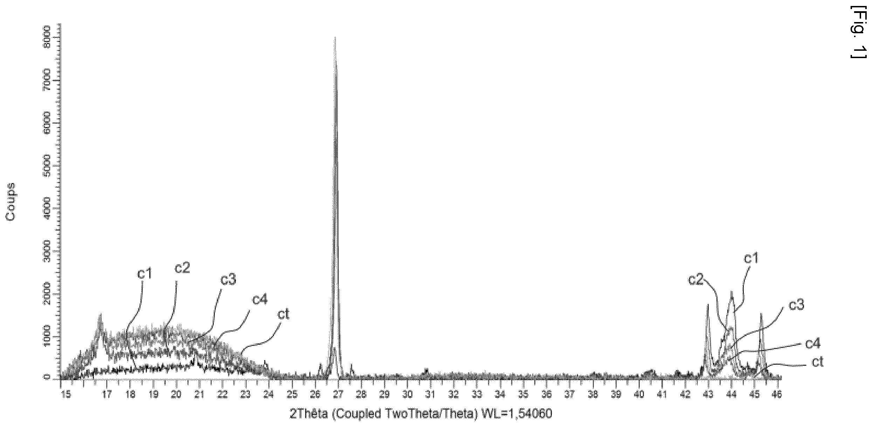

La Figure 1 représente le diffractogramme obtenu pour l'échantillon témoin ct et les échantillons c1 à c4 dont la couche d'authentification se situe respectivement aux profondeurs 0-100 µm, 100-200 µm, 200-300 µm et 300-400 µm. Comme on peut l'observer, les signatures DRX des échantillons c1 à c4 - résultant du couplage matériau d'authentification et PLA - sont différentes entre elles, et différentes de la signature de l'échantillon témoin ct.

Ainsi, les analyses révèlent que la modification de la position de la couche de matériau d'authentification modifie la signature obtenue jusqu'à environ 600 µm, soit jusqu'à la 6ème couche. Au-delà de cette profondeur, la signature d'une pastille composite redevient très proche ou identique à celle de la pastille témoin. On peut donc considérer que la signature composite peut être mesurée efficacement jusqu'à 600 µm, ce qui représente une limite de détectabilité pour les conditions d'analyse DRX choisies.

Ce premier exemple permet de conclure que les signatures DRX sont contrôlables dans un objet en fonction de la position du matériau d'authentification selon l'axe Z, donc en fonction de la profondeur.

### • Exemple 2

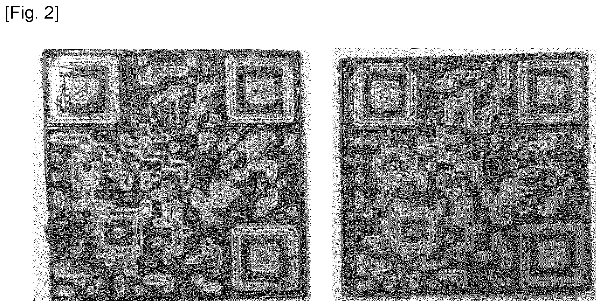

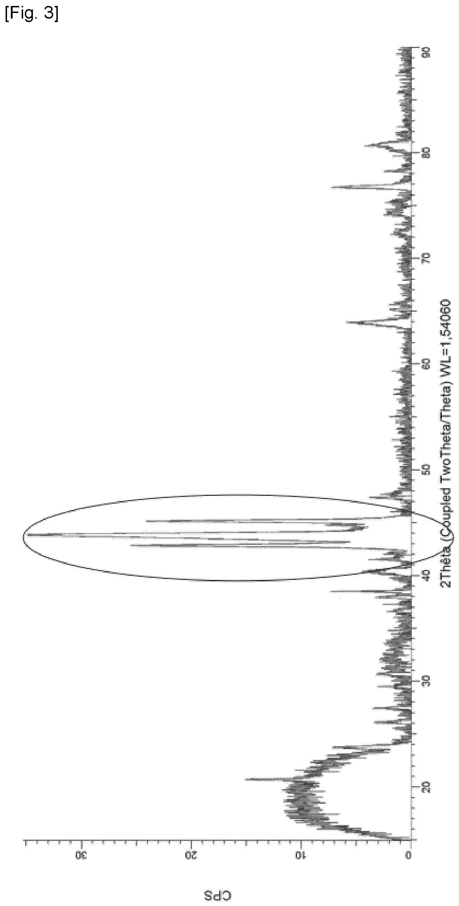

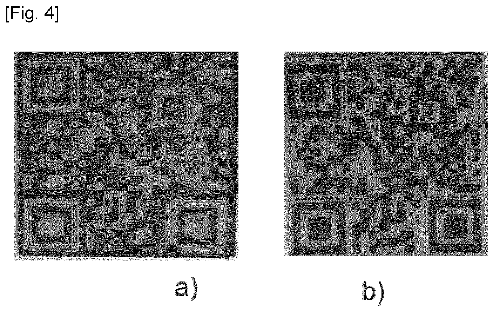

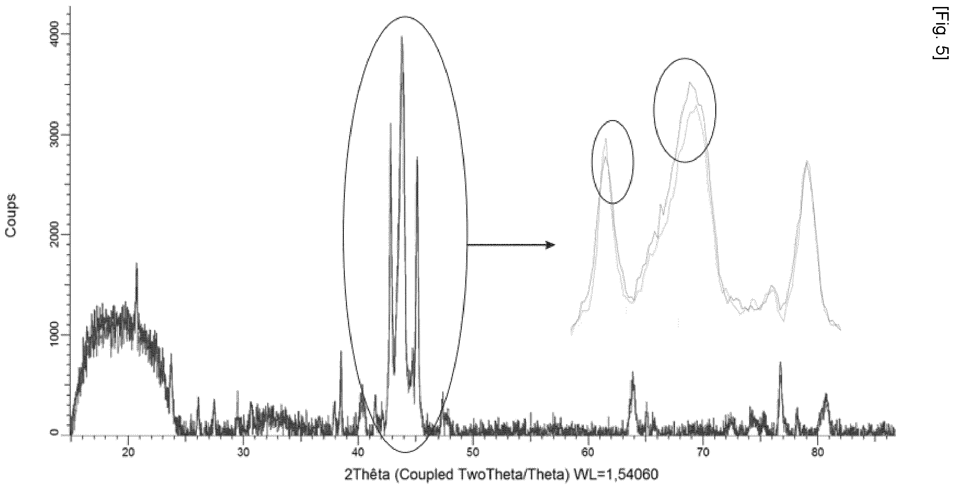

Cet exemple vise à étudier la répétabilité de la mesure d'authentification. On génère un QR code, comportant deux couleurs, et on l'imprime en utilisant un filament PLA pour une couleur et un filament d'authentification pour l'autre. Ainsi on a un QR code noir et gris clair, le noir correspondant au filament d'authentification et le gris clair au filament PLA.
**i) Manipulation 2-A.** On imprime deux QR codes identiques en terme de motif et en terme de filaments utilisés. Ils sont représentés à la Fig.2. Les signatures DRX obtenues après analyses sont identiques, cf. Fig. 3. Ces résultats confirment que pour un même motif, la répartition des matériaux étant identique, on obtient la même signature d'authentification. Les signatures sont donc reproductibles pour une zone d'identification identique.
**ii) Manipulation 2-B.** Dans un second temps, on garde toujours le même motif, et on inverse ses couleurs. On imprime un deuxième QR code, mais le gris clair prend la place du noir et inversement, tel qu'illustré à la Fig.4. Les signatures obtenues se révèlent être très proches et difficilement discernables, cf. Fig.5. En effet, lorsque la répartition des deux couleurs est similaire, par ex. 50/50 de répartition surfacique, on a la même concentration des deux matériaux avant et après inversement des couleurs.

Il est donc possible de créer deux motifs différents mais avec des répartitions de matériaux (couleurs) similaires, et donc d'avoir deux signatures DRX identiques pour deux informations d'identification différentes.

On peut donc en conclure que les signatures DRX sont reproductibles pour une zone d'identification différente.

### • Exemple 3

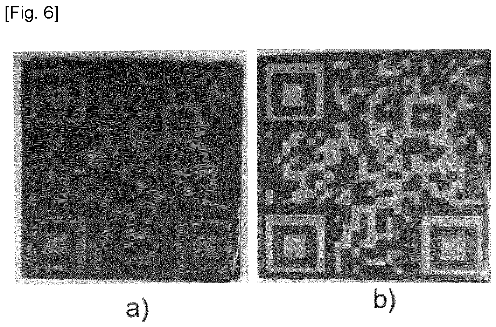

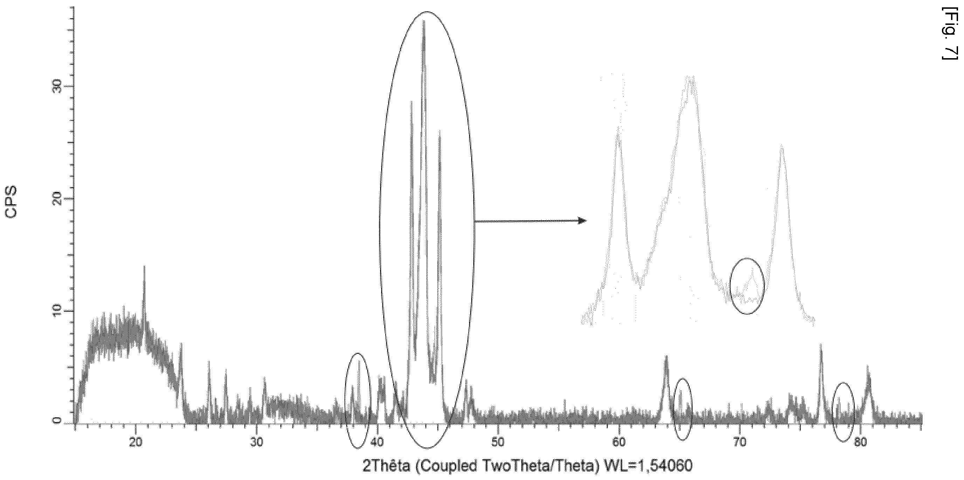

Cet exemple démontre la possibilité de modifier la signature tout en gardant le même motif d'identification.
**i) Manipulation 3-A.** On répète la première manipulation (2-A) de l'exemple 2 en faisant varier le filament PLA utilisé, en changeant de couleur et d'opacité (exemple : rouge à la place du gris clair). Le noir est donc réalisé avec le filament de matière d'authentification. Les QR codes sont montrés Fig.6.
   Pour deux QR codes de même motif, donc codant la même information, on obtient deux signatures différentes, voir Fig.7. Donc pour une même information d'identification, l'authentification change : les signatures DRX sont différentes pour une zone d'identification identique.
**ii) Manipulation 3-B.** Ensuite, on imprime deux pastilles QR codes avec la première couche identiques (même motif, mêmes matériaux...). Cette fois, on intervient uniquement sur les couches inférieures pour modifier l'information volumique d'authentification tout en conservant la même information d'identification (car même motif surfacique). La composition de chaque couche est indiquée dans le tableau ci-dessous ; étant noté que les couches 2, 3 et 4 sont différentes entre les deux pastilles fabriquées.

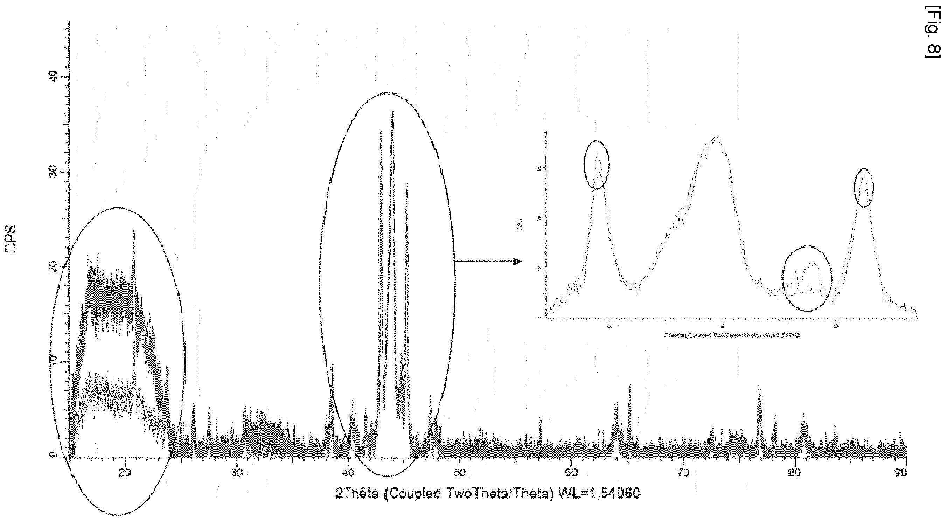

Le diffractogramme des deux pastilles est montré en Fig. 8. Comme on peut le voir, les signatures sont différentes pour une zone d'identification identique. Cet exemple démontre donc la possibilité de modifier la signature DRX pour une même information d'identification.

**[Tableau 1]**

| | 1 | 2 |
|---|---|---|
| Couche 1 | M.A. = Matériau d'authentification {Polymère+CMAs} + PLA | |
| Couche 2 | M.A. | PLA |
| Couche 3 | M.A. | PLA |
| Couche 4 | M.A. | PLA |

### Exemple 4

Contrairement aux exemples précédents, cet exemple ne fait pas appel à l'impression 3D mais à la sérigraphie (dépôt d'encres). II ne fait pas partie de l'invention revendiquée, mais peut être utile à sa compréhension.

On réalise un mélange d'une encre de sérigraphie {matériau actif (Ag, C, poudre diélectrique...) + résines époxy, acrylique, polyimide ou phénoliques} et des additifs/poudres de matière d'authentification. On fabrique ensuite un masque à partir d'une feuille de PET (épaisseur -130 µm) dans laquelle on découpe le motif souhaité (par ex. un disque) à l'aide d'une machine de découpe laser. Le substrat utilisé par la suite, pour la sérigraphie, est de même nature que le masque : une feuille PET d'environ 130 µm.

Après avoir réalisé notre objet par sérigraphie, on obtient donc un dépôt d'authentification d'environ 130 µm sur un substrat PET. Cet échantillon multicouches (PET/Dépôt d'authentification) possède une signature DRX unique.

Trois matériaux ont été analysés, dont un préparé selon ce protocole :
- a1 : alliage métallique complexe 1, sous forme de poudre
- a2 : alliage métallique complexe 2, sous forme de poudre
- s : échantillon préparé par sérigraphie, avec un substrat PET et une encre contenant de la poudre d'authentification dont les deux constituant a1 et a2 (deux alliages métalliques complexes)

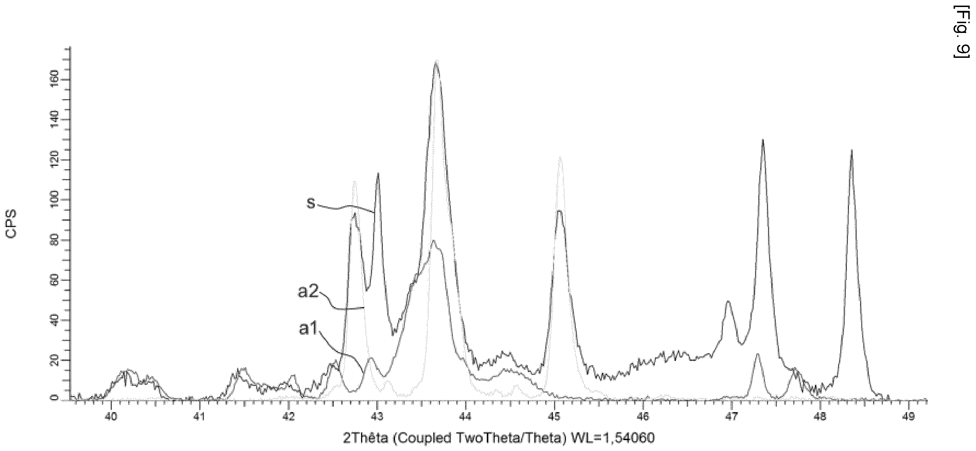

Le diffractogramme de chacun des échantillons est représenté à la Fig.9.

L'analyse DRX de l'échantillon réalisé par sérigraphie permet bien de détecter une signature DRX permettant l'authentification de l'échantillon.

### Exemple 5

Cet exemple vise à déterminer le seuil de séparation de deux motifs d'identification.

Pour cet exemple, on se base sur une zone analysée lors d'une analyse DRX de 1 cm², ainsi que sur la résolution limite d'une imprimante FDM basique équipée d'une buse 0,4mm de diamètre : ordre de grandeur de 1mm. Ainsi, on réalise des pavés de 1cm² et 1mm d'épaisseur, quadrillés à l'aide de 100 petits cubes de 1mm³.

L'objectif est de vérifier le seuil, en terme de volume (donc de cubes de 1mm³), à partir duquel on modifie la signature de manière suffisante pour être détectée avec le présent équipement d'analyse DRX.

On réalise alors différents pavés, un avec 100% de cubes imprimés à l'aide du filament PLA, un avec 100% de cubes imprimés à l'aide du filament d'authentification puis un pavé avec 50 cubes en PLA et 50 en matériau d'authentification (M.A.). Enfin, à partir de ce dernier pavé 50/50, on réalise 4 autres pavés où l'on varie cette répartition en modifiant la composition d'un ou deux cubes (ex : 51 cubes en PLA et 49 en matériau d'authentification, donc 1 cube est passé de la composition du matériau d'authentification au PLA).

Après analyse DRX, il apparaît que la modification de la composition de 1 à 4 cubes sur 100 cubes (soit 1 à 4%_{volumique} de variation de composition) ne permet pas d'obtenir des signatures DRX séparables.

Ainsi, le même protocole est répété, cette fois-ci en augmentant le pas. Les pavés sont de mêmes dimensions, mais ils sont quadrillés en 5x5 cubes de 4mm³, soit des pavés de 25 cubes. Lorsque la composition d'un seul cube est modifiée, cela représente alors 4%_{volumique} de variation de composition.

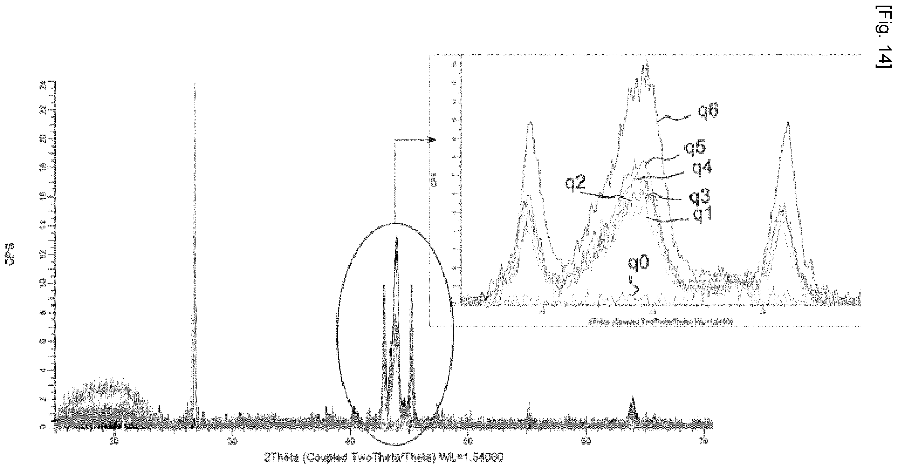

Les analyses DRX révèlent qu'un pas de 2 cubes de 4mm³, soit 8%_{volumique} de variation de composition, permet d'obtenir deux signatures différentes. Ce seuil de discrétisation est bien illustré à la Figure 14, qui représente les diffractogrammes pour les différents pavés réalisés, à savoir : q0=100% PLA, q1=42% M.A., q2=46% M.A., q3=50% M.A., q4=54% M.A., q5=58% M.A., et q6=100% M.A. Comme on le voit bien, une différence de 8%_{volumique} pour la matière d'authentification est suffisant pour différencier les signatures DRX (ex : entre q3 et q5).

### B) Modes de réalisation

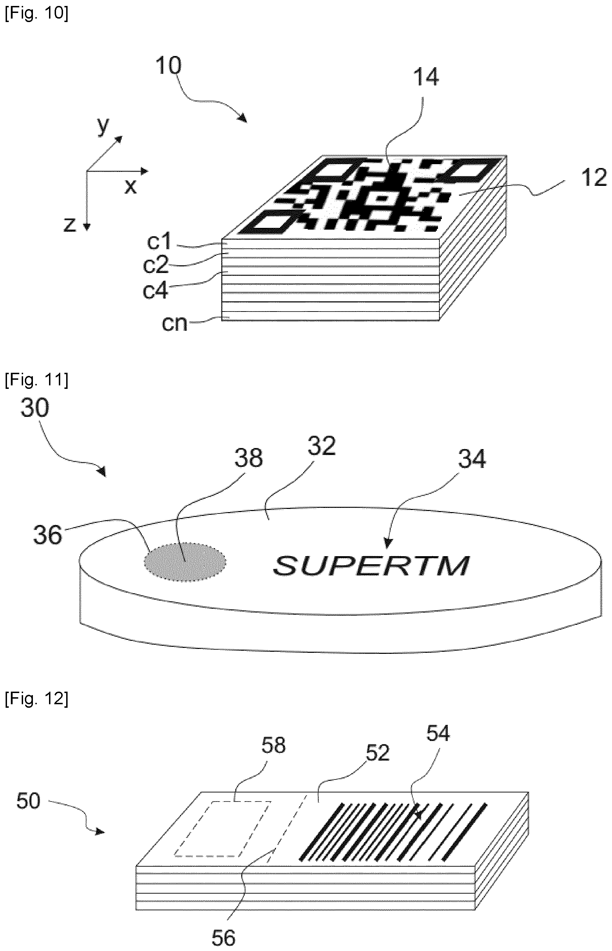

Le principe de fonctionnement de l'invention ayant été démontré sur base des exemples précédents, on décrira maintenant, à l'aide des figures 10 à 13, plusieurs possibilités de réalisation du présent objet anti-contrefaçon, ici sous la forme de pastilles, que l'on peut aussi appeler plaquette ou étiquette.

Chacun des objets 10, 30, 50 et 70 comprend une face 12, 32, 52 et 72 qui porte une zone d'identification présentant un marquage d'identification 14, 34, 54 et 74. Tous les marquages d'identification sont ici visibles à l'œil nu, dans des conditions normales. La face 12, 32, 52 et 72 s'étend dans les exemples dans un plan parallèle à (x,y), et la direction de l'épaisseur est donc celle de l'axe z, typiquement perpendiculaire à (x,y).

Chaque objet comprend un volume d'authentification s'étendant depuis la face 12, 32, 52 et 72 dans la direction de l'épaisseur (selon l'axe z) de sorte à être accessible pour une lecture par diffractométrie de rayons X, DRX. Le volume d'authentification est un composite d'une première matière, dite matière d'authentification, et d'au moins une deuxième matière. La matière d'authentification comprend au moins une phase amorphe, au moins une phase cristalline et au moins une phase métallique complexe.

La matière d'authentification a une signature DRX qui est infalsifiable car l'usage des phases métalliques complexes rend impossible l'analyse qualitative et quantitative.

La deuxième matière est utilisée pour obtenir une signature composite, résultant de la combinaison des deux matières dans le volume d'analyse, et donc différente de celle de la signature DRX de la première matière seule.

Le volume d'authentification est ainsi un volume composite de la première et deuxième matière. Les deux matières sont présentes dans ce volume, mais la première et deuxième matière de sont pas miscibles. Le volume d'authentification comprend donc des volumes de la première et la deuxième matière.

Comme on le comprend des figures, le volume d'authentification est associé au marquage d'identification. Le marquage d'identification constitue un marquage de surface visible, alors que le volume d'authentification est un marquage non-visible qui s'étend dans le volume. De manière générale, le volume d'authentification est placé à proximité ou se superpose au moins en partie avec le marquage d'identification (vue dans la direction z).

Un opérateur qui connait la construction de ce type d'objet, sait qu'il peut authentifier l'objet en analysant le volume d'authentification par analyse de DRX au niveau d'une zone à attaquer depuis la surface 12, et qui se situe à proximité de la zone de marquage ou se superpose avec celle-ci (de manière partielle ou totale).

La technologie d'impression 3D conventionnelle de type FDM (dépôt de matière fondue) est particulièrement intéressante car elle permet de maîtriser la combinaison de matière en utilisant selon l'invention revendiquée un fil de la matière d'authentification et un fil de la deuxième matière, par ex. à base polymère. La résolution de l'impression 3D conventionnelle va permettre des dépôts en couches ou strates, en choisissant le positionnement des matières aussi bien dans le plan (X,Y) que dans l'épaisseur (Z) de l'objet. La distribution de matière est donc entièrement maîtrisée dans le volume d'authentification, avec une bonne précision, ce qui permet une excellente reproductibilité de la construction. La maitrise du dépôt va aussi permettre de maitriser différentes constructions du volume d'authentification (ratios et positions en X-Y-Z).

On a représenté sur la Fig.10 un repère (X, Y, Z), les couches sont parallèles au plan X, Y, et empilées selon l'axe Z (c'est donc l'axe de l'épaisseur). L'épaisseur d'une couche est par exemple d'environ 100 µm, mais peut typiquement varier dans entre 20 et 300 µm avec les imprimantes classiques.

L'objet de la figure 10 est une pastille QR code, qui a un corps parallélépipédique. La couche de surface est obtenue par impression avec deux fils de PLA de couleurs différentes, afin de former le QR code désiré. La couche de surface C1 repose sur une pluralité de couches imprimées C2 à Cn en PLA, sauf une couche, par ex C4, qui est imprimée entièrement avec la matière d'authentification. On a donc une couche de matière d'authentification qui s'étend à une distance donnée sous la surface, toutefois dans la limite de détection DRX (de préférence < 600 µm). Lors de l'analyse DRX par la surface 12, on obtient une signature DRX composite résultant de la combinaison du PLA et du matériau d'authentification, sur la profondeur de détection/pénétration.

La couche d'authentification est ici 100% de matière d'authentification, mais il peut y en avoir moins, en combinaison avec le PLA ou un autre polymère imprimable. De manière générale, on peut avoir de la matière d'authentification dans une ou plusieurs couches, de C1 jusqu'à la couche Ci se situant à la limite de détection. En effet, en pratique on pourra jouer sur la présence de matière d'authentification dans plusieurs couches, pour multiplier le nombre de signatures. La couche C1 peut aussi être réalisée avec un fil de matière d'authentification et un fil à base polymère de couleur différente.

L'objet de la Fig.11 est une simple étiquette (corps plat et ovale) avec un marquage d'identification 34 lisible à l'œil et indiquant simplement un texte, qui peut être la marque d'un produit ou d'un service, ou encore le nom d'une société. Cette étiquette est fabriquée par impression 3D avec les mêmes matériaux que pour la pastille de la Fig.10, et on a intégré une couche 100% de matériau d'authentification à une profondeur donnée, dans la limite de détection de l'analyse DRX. La couche de matériau d'identification a la même surface que la face 34. L'analyse DRX peut donc être réalisée à tout endroit de la face 32, pour obtenir la signature DRX de l'objet.

Dans un autre mode de réalisation, qui ne fait pas partie de l'invention revendiquée, l'étiquette peut être fabriquée dans un matériau plastique conventionnel (ou d'autres matériaux : bois, cuir, tissu....), par impression ou non, ex. PET, PLA, ABS, PA, PEHD, ... c'est-à-dire n'intégrant pas de couche interne de matière d'authentification. Le signe de référence 36 désigne une cavité circulaire d'un diamètre d'environ 10 à 20 mm et d'une profondeur de 100 à 200 µm remplie d'une encre déposée par sérigraphie, indiquée 38. L'encre est, comme pour l'exemple 4 ci-dessus, un mélange des composés de l'encre proprement dite, et de poudres de matière d'authentification. La signature DRX de l'objet peut donc être déterminée par analyse DRX au niveau du dépôt d'encre 38. La signature DRX est une signature composite résultant des matériaux en présence, notamment l'encre avec les composés de l'encre et les poudres de matière d'authentification, et le support sous-jacent.

Dans la variante de la Fig.12, on a produit par impression 3D une étiquette 50 (corps parallélépipédique) qui comprend sur sa face 52 une zone d'identification présentant un marquage d'identification 54 type code à barres linéaire. Lors de la fabrication, on a déposé, à une profondeur donnée, la matière d'authentification sur une portion de la surface 52 de l'étiquette 50. Plus précisément, la matière d'authentification est déposée à côté du code barre 54, ici à une extrémité longitudinale, en particulier à gauche de la ligne discontinue 56 (ligne virtuelle).

L'étiquette comprend ainsi un marquage d'identification 54, et une zone d'authentification 58 (représentée de manière symbolique par le rectangle discontinu) séparée mais voisine de la zone d'indentification 54. La ligne 56 ou le cadre 58 pourrait être dessiné sur la face 52 pour indiquer à l'opérateur l'endroit où faire l'analyse DRX.

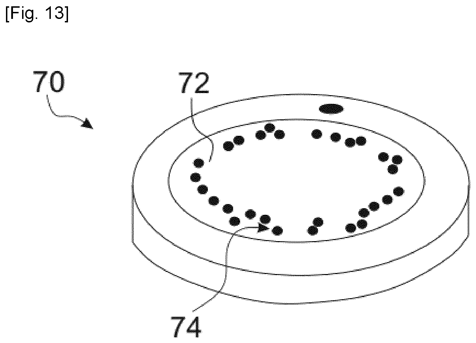

Le mode de réalisation de la Fig.13 est réalisé sur le même principe que l'étiquette de la Fig.10. Il s'agit ici d'un pion 70 imprimé en PLA en forme de disque. La couche de surface comprend un code bidimensionnel circulaire 74 du type « bleam » réalisé avec deux fils en PLA différents. Une couche avec 100% de matière d'authentification est disposée à une profondeur prédéterminée pour permettre l'analyse DRX. L'analyse DRX peut donc se faire à tout endroit de la face 72 du pion 70. Le code 74 s'étend uniquement sur une partie de la couche de surface. Les zones d'authentification et d'identification sont donc partiellement superposées.

Le marquage d'identification représente des informations qui peuvent être de natures différentes, en particulier une ou plusieurs des informations suivantes : nature de l'objet, dénomination, référence fabriquant, données réglementaires, et informations relatives à la signature DRX.

Concernant les informations relatives à la signature DRX, on peut inclure un lien pointant vers un fichier ou base de données comprenant la signature DRX de référence. Alternativement, on peut encoder directement dans le marquage d'identification la signature DRX de référence, c'est-à-dire des informations représentant les pics caractéristiques (angle, intensité).

Les résultats présentés ci-dessus, et notamment les diffractogrammes, ont été obtenus avec une technique de caractérisation de rayons X donnée, présentée plus haut, notamment avec une source Rx au cuivre. Il est clair pour l'homme du métier que, selon les matériaux/composites analysés, le diffractogramme peut varier en fonction de la longueur d'onde du rayonnement X incident. Afin de pouvoir comparer des diffractogrammes, on s'assurera donc d'employer des techniques de caractérisation X similaires, notamment avec la même source Rx (même longueur d'onde). Le cas échéant, les informations relatives à la signature DRX de référence peuvent inclure la longueur d'onde et/ou le type de source Rx à employer.

## Revendications

1. Objet anti-contrefaçon comprenant :
une face (12) avec un marquage d'identification (14) optique lisible à l'œil et/ou par une machine, et
un volume d'authentification, ledit volume d'authentification s'étendant depuis ladite face (12), ou depuis une autre face de l'objet, dans la direction de l'épaisseur (z) de sorte à être accessible depuis cette face pour une lecture par diffractométrie de rayons X, DRX ;
dans lequel le volume d'authentification est un composite d'une première matière, dite matière d'authentification, et d'au moins une deuxième matière, le volume d'authentification représentant un volume de matière d'au moins 5mm³, le volume d'authentification ayant une signature DRX résultant de la combinaison des émissions des deux matières ; et
la matière d'authentification comprend au moins une phase amorphe, au moins une phase cristalline et au moins une phase métallique complexe ; dans lequel la deuxième matière possède une signature DRX propre, différente de celle de la première matière ;
dans lequel le volume d'authentification combine les première et deuxième matières, de manière non-miscible, et résulte de l'association, juxtaposition et/ou superposition des première et deuxième matières, apportées de manière séparée par construction additive utilisant un filament de la matière d'authentification et un filament de la deuxième matière ; et
dans lequel le marquage d'identification (14) indique la zone d'authentification ou comprend des informations relatives à la position du volume d'authentification dans l'objet.

2. Objet selon l'une des revendications précédentes, dans lequel la matière d'authentification est présente en surface et/ou distribuée dans l'épaisseur.

3. Objet selon l'une des revendications précédentes, dans lequel la matière d'authentification est présente, dans le volume d'authentification, à une profondeur donnée, ou à plusieurs profondeurs par rapport à la surface.

4. Objet selon l'une des revendications précédentes, dans lequel la matière d'authentification occupe un volume d'au moins 10 mm³.

5. Objet selon l'une des revendications précédentes, dans lequel le volume d'authentification s'étend depuis ladite face à une profondeur entre 0 et 1,5 mm, de préférence entre 0 et 1 mm, de manière plus préférée entre 0 et 0,6 mm, en particulier entre 0 et 0,4 mm, et/ou
dans lequel le volume d'authentification s'étend sur une surface, prise dans un plan sensiblement parallèle à ladite face de l'objet, d'au moins 10 mm², de préférence au moins 100 mm².

6. Objet selon l'une des revendications 1 à 4, dans lequel, vu dans la direction de l'épaisseur, le marquage d'identification optique et le volume d'authentification se superposent au moins partiellement, pour une lecture depuis ladite face (12), ou dans lequel le marquage d'identification comprend une série de marques représentatives d'un code délimitées par une ligne périphérique, le volume d'authentification se trouvant à l'intérieur du contour de cette ligne périphérique.

7. Objet selon l'une des revendications 1 à 4, dans lequel le marquage d'identification optique est réalisé à partir des deux matières, chacune ayant une couleur différente, ou dans lequel le marquage d'identification est un marquage matriciel bicolore, une couche de surface étant réalisée à partir de la première et deuxième matière, chacune ayant une couleur différente.

8. Objet selon l'une des revendications 1 à 4, dans lequel l'objet est constitué d'une pluralité de couches superposées formées par impression 3D, au moins une des couches situées à une profondeur entre 0 et 0,6 mm de la surface comprenant au moins en partie de la matière d'authentification.

9. Objet selon l'une des revendications 1 à 4, dans lequel le marquage d'identification optique comprend des coordonnées de mesure pour effectuer l'analyse DRX, indiquant l'emplacement de la zone de mesure.

10. Procédé de fabrication d'un objet anti-contrefaçon selon la revendication 1, dans lequel ledit objet est réalisé par construction additive utilisant un filament de matière d'authentification comprenant au moins une phase amorphe, au moins une phase cristalline et au moins une phase métallique complexe, et au moins un filament à base polymère de couleur différente, dans lequel ledit objet est formé par impression successive d'une pluralité de couches, une couche de surface étant imprimée de sorte à former un marquage d'identification et la matière du filament de matière d'authentification étant déposée dans la couche de surface et/ou dans une ou plusieurs couches sous la couche de surface de sorte à former un volume d'authentification, de sorte que le volume d'authentification présente une signature DRX résultant de la combinaison des émissions des deux matières,
dans lequel le marquage d'identification indique la zone d'authentification ou comprend des informations relatives à la position du volume d'authentification dans l'objet.

11. Procédé d'authentification d'un objet anti-contrefaçon selon l'une des revendications 1 à 5, comprenant :
lecture du marquage d'identification de l'objet anti-contrefaçon par un instrument de lecture afin d'obtenir des informations ;
analyse par diffraction de rayons X, DRX, de la zone d'authentification de l'objet anti-contrefaçon afin de déterminer sa signature DRX ;
comparaison de la signature DRX de l'objet anti-contrefaçon avec une signature DRX de référence.

12. Procédé selon la revendication 11,
dans lequel ledit marquage d'identification comprend des informations relatives à ladite signature DRX de référence, en particulier concernant les position et intensités des pics caractéristiques.

13. Procédé selon la revendication 11, dans lequel ladite signature DRX de référence est obtenue d'une base de données.

14. Procédé de fabrication d'un objet anti-contrefaçon dans lequel au moins une partie de l'objet est fabriquée en mélangeant, de manière non-miscible, une première, dite matière d'authentification, et au moins une deuxième matière de sorte à former un volume d'authentification, ledit volume d'authentification s'étendant depuis une face de l'objet dans la direction de l'épaisseur (z) de sorte à être accessible depuis cette face pour une lecture par diffractométrie de rayons X, DRX , le volume d'authentification ayant une signature DRX résultant de la combinaison des émissions des deux matières, et
l'objet comporte également sur cette face ou une autre face un marquage d'identification (14) optique lisible à l'œil et/ou par une machine ;
ledit marquage d'identification optique indiquant la zone d'authentification ou comprenant des informations relatives à la position du volume d'authentification dans l'objet ;
et la matière d'authentification comprend au moins une phase amorphe, au moins une phase cristalline et au moins une phase métallique complexe ;
dans lequel les premières et deuxième matières sont apportées de manière séparée par construction additive utilisant un filament de la matière d'authentification et un filament de la deuxième matière pour former le volume d'authentification, dans lequel elles sont associées, juxtaposées et/ou superposées.

## Patentansprüche

1. Fälschungssicheres Objekt, umfassend:
eine Fläche (12) mit einem Identitätskennzeichen (14), das optisch mit bloßem Auge und/oder von einer Maschine auslesbar ist, und
ein Authentifizierungsvolumen, wobei das Authentifizierungsvolumen sich von der Fläche (12), oder von einer anderen Fläche des Objekts, aus in der Richtung der Dicke (z) so erstreckt, dass es von dieser Fläche aus für eine Entschlüsselung durch Röntgendiffraktion, XRD, zugänglich ist;
wobei das Authentifizierungsvolumen ein Verbund aus einem ersten Material, so genanntes Authentifizierungsmaterial, und aus wenigstens einem zweiten Material ist, wobei das Authentifizierungsvolumen ein Materialvolumen von wenigstens 5 mm³ repräsentiert, wobei das Authentifizierungsvolumen eine XRD-Signatur hat, die aus der Kombination der Emissionen der zwei Materialien resultiert; und das Authentifizierungsmaterial wenigstens eine amorphe Phase, wenigstens eine kristalline Phase und wenigstens eine komplexe metallische Phase enthält; wobei das zweite Material eine eigene XRD-Signatur besitzt, die von der des ersten Materials verschieden ist;
wobei das Authentifizierungsvolumen das erste und zweite Material, auf nicht mischbare Weise, kombiniert und aus dem Verbinden,
Nebeneinanderlegen und/oder Übereinanderlegen des ersten und zweiten Materials resultiert, die getrennt durch additive Fertigung unter Verwendung eines Filaments aus dem Authentifizierungsmaterial und eines Filaments aus dem zweiten Material zugeführt sind; und
wobei das Identitätskennzeichen (14) die Authentifizierungszone angibt oder Informationen über die Position des Authentifizierungsvolumens in dem Objekt enthält.

2. Objekt nach einem der vorhergehenden Ansprüche, wobei das Authentifizierungsmaterial an der Oberfläche vorhanden und/oder in der Dicke verteilt ist.

3. Objekt nach einem der vorhergehenden Ansprüche, wobei das Authentifizierungsmaterial, in dem Authentifizierungsvolumen, in einer gegebenen Tiefe oder in mehreren Tiefen relativ zu der Oberfläche vorhanden ist.

4. Objekt nach einem der vorhergehenden Ansprüche, wobei das Authentifizierungsmaterial ein Volumen von wenigstens 10 mm³ belegt.

5. Objekt nach einem der vorhergehenden Ansprüche, wobei das Authentifizierungsvolumen sich von der Fläche aus in eine Tiefe zwischen 0 und 1,5 mm, bevorzugt zwischen 0 und 1 mm, weiter bevorzugt zwischen 0 und 0,6 mm, insbesondere zwischen 0 und 0,4 mm erstreckt und/oder
wobei das Authentifizierungsvolumen sich über eine Oberfläche, in einer zu der Fläche des Objekts im Wesentlichen parallelen Ebene, von wenigstens 10 mm², bevorzugt wenigstens 100 mm² erstreckt.

6. Objekt nach einem der Ansprüche 1 bis 4, wobei, in der Richtung der Dicke gesehen, das optische Identitätskennzeichen und das Authentifizierungsvolumen, für ein Auslesen von der Fläche (12) aus, wenigstens teilweise übereinanderliegen, oder wobei das Identitätskennzeichen eine Reihe von Markierungen umfasst, die für einen Code repräsentativ und durch eine umlaufende Linie begrenzt sind, wobei sich das Authentifizierungsvolumen innerhalb der Kontur dieser umlaufenden Linie befindet.

7. Objekt nach einem der Ansprüche 1 bis 4, wobei das optische Identitätskennzeichen aus den zwei Materialien realisiert ist, wobei jedes eine unterschiedliche Farbe hat, oder wobei das Identitätskennzeichen ein zweifarbiges Matrix-Kennzeichen ist, wobei eine Oberflächenschicht aus dem ersten und zweiten Material realisiert ist, wobei jedes eine unterschiedliche Farbe hat.

8. Objekt nach einem der Ansprüche 1 bis 4, wobei das Objekt aus einer Mehrzahl von übereinanderliegenden Schichten besteht, die durch 3D-Druck gebildet sind, wobei wenigstens eine der Schichten, die sich in einer Tiefe zwischen 0 und 0,6 mm der Oberfläche befinden, wenigstens teilweise das Authentifizierungsmaterial enthält.

9. Objekt nach einem der Ansprüche 1 bis 4, wobei das optische Identitätskennzeichen Messkoordinaten enthält, um die XRD-Analyse durchzuführen, die die Lage der Messzone angeben.

10. Verfahren zum Herstellen eines fälschungssicheren Objekts nach Anspruch 1, wobei das Objekt durch additive Fertigung unter Verwendung eines Filaments aus dem Authentifizierungsmaterial, das wenigstens eine amorphe Phase, wenigstens eine kristalline Phase und wenigstens eine komplexe metallische Phase enthält, und wenigstens eines Filaments auf Polymerbasis in einer unterschiedlichen Farbe realisiert wird, wobei das Objekt durch sukzessives Drucken einer Mehrzahl von Schichten gebildet wird, wobei eine Oberflächenschicht so gedruckt wird, dass sie ein Identitätskennzeichen bildet, und wobei das Material des Filaments aus dem Authentifizierungsmaterial in der Oberflächenschicht und/oder in einer oder mehreren Schichten unter der Oberflächenschicht so aufgetragen wird, dass es ein Authentifizierungsvolumen so bildet, dass das Authentifizierungsvolumen eine XRD-Signatur aufweist, die aus der Kombination der Emissionen der zwei Materialien resultiert,
wobei das Identitätskennzeichen die Authentifizierungszone angibt oder Informationen über die Position des Authentifizierungsvolumens in dem Objekt enthält.

11. Verfahren zur Authentifizierung eines fälschungssicheren Objekts nach einem der Ansprüche 1 bis 5, umfassend:
Auslesen des Identitätskennzeichens des fälschungssicheren Objekts durch ein Leseinstrument, um Informationen zu erhalten;
Analysieren durch Röntgendiffraktion, DRX, der Authentifizierungszone des fälschungssicheren Objekts, um dessen XRD-Signatur zu ermitteln;
Vergleichen der XRD-Signatur des fälschungssicheren Objekts mit einer Referenz-XRD-Signatur.

12. Verfahren nach Anspruch 11,
wobei das Identitätskennzeichen Informationen über die Referenz-XRD-Signatur enthält, insbesondere betreffend die Position und Intensität der charakteristischen Peaks.

13. Verfahren nach Anspruch 11, wobei die Referenz-XRD-Signatur aus einer Datenbank erhalten wird.

14. Verfahren zum Herstellen eines fälschungssicheren Objekts, wobei wenigstens ein Teil des Objekts hergestellt wird, indem, auf nicht mischbare Weise, ein erstes Material, so genanntes Authentifizierungsmaterial, und wenigstens ein zweites Material so vermengt werden, dass sie ein Authentifizierungsvolumen bilden, wobei das Authentifizierungsvolumen sich von einer Fläche des Objekts aus in der Richtung der Dicke (z) so erstreckt, dass es von dieser Fläche aus für eine Entschlüsselung durch Röntgendiffraktion, XRD, zugänglich ist; wobei das Authentifizierungsvolumen eine XRD-Signatur hat, die aus der Kombination der Emissionen der zwei Materialien resultiert; und
das Objekt ferner auf dieser Fläche oder auf einer anderen Fläche ein Identitätskennzeichen (14) aufweist, das optisch mit bloßem Auge und/oder von einer Maschine auslesbar ist; wobei das optische Identitätskennzeichen die Authentifizierungszone angibt oder Informationen über die Position des Authentifizierungsvolumens in dem Objekt enthält;
und das Authentifizierungsmaterial wenigstens eine amorphe Phase, wenigstens eine kristalline Phase und wenigstens eine komplexe metallische Phase enthält;
wobei das erste und zweite Material getrennt durch additive Fertigung unter Verwendung eines Filaments aus dem Authentifizierungsmaterial und eines Filaments aus dem zweiten Material zugeführt werden, um das Authentifizierungsvolumen zu bilden, indem sie verbunden, nebeneinandergelegt und/oder übereinandergelegt werden.

## Claims

1. An anti-counterfeiting object, comprising:
a side (12) with an optical identification marking (14) which is readable by the eye and/or by a machine, and
an authentication volume, said authentication volume extending from said side (12), or from another side of the object, in the thickness (z) direction so as to be accessible from this side in order to be read by x-ray diffractometry, XRD;
wherein the authentication volume is a composite of a first material, referred to as the authentication material, and at least one second material, the authentication volume constituting a material volume of at least 5 mm³, the authentication volume having an XRD signature resulting from the combination of emissions from the two materials; and
the authentication material comprises at least one amorphous phase, at least one crystalline phase and at least one complex metal phase;
wherein the second material has its own XRD signature, different from that of the first material;
wherein the authentication volume combines the first and second materials, in a non-miscible manner, and results from the association, juxtaposition and/or superposition of the first and second materials, added separately by additive construction using a filament of the authentication material and a filament of the second material; and
wherein the identification marking (14) indicates the authentication area or comprises information relative to the position of the authentication volume within the object.

2. The object according to one of the preceding claims, wherein the authentication material is present on the surface and/or distributed in the thickness.

3. The object according to one of the preceding claims, wherein the authentication material is present, in the authentication volume, at a given depth, or at several depths relative to the surface.

4. The object according to one of the preceding claims, wherein the authentication material occupies a volume of at least 10 mm³.

5. The object according to one of the preceding claims, wherein the authentication volume extends from said side to a depth between 0 and 1.5 mm, preferably between 0 and 1 mm, more preferably between 0 and 0.6 mm, in particular between 0 and 0.4 mm, and/or
wherein the authentication volume extends over a surface, taken in a plane substantially parallel to said side of the object, of at least 10 mm², preferably at least 100 mm².

6. The object according to one of claims 1 to 4, wherein, seen in the direction of the thickness, the optical identification marking and the authentication volume are superimposed at least partially, for reading from said side (12), or wherein the identification marking comprises a series of marks that are representative of a code delimited by a peripheral line, the authentication volume being located inside the contour of this peripheral line.

7. The object according to one of claims 1 to 4, wherein the optical identification marking is done from two materials, each having a different color, or wherein the identification marking is a two-color matrix marking, a surface layer being made from the first and the second material, each having a different color.

8. The object according to one of claims 1 to 4, wherein the object is made up of a plurality of superimposed layers formed by 3D printing, at least one of the layers located at a depth between 0 and 0.6 mm from the surface comprising at least part of the authentication material.

9. The object according to one of claims 1 to 4, wherein the optical identification marking comprises measurement coordinates to perform the XRD analysis, indicating the location of the measurement area.

10. A method for manufacturing an anti-counterfeiting object according to claim 1, wherein said object is made by additive construction using a filament of authentication material comprising at least one amorphous phase, at least one crystalline phase and at least one complex metal phase, and at least one polymer-based filament of a different color, wherein said object is formed by successive printing of a plurality of layers, a surface layer being printed so as to form an identification marking and the material of the filament of authentication material being deposited in the surface layer and/or in one or a plurality of layers below the surface layer so as to form an authentication volume, such that the authentication volume has an XRD signature resulting from the combination of emissions from two materials,
wherein the identification marking indicates the authentication area or comprises information relative to the position of the authentication volume within the object.

11. A method for authenticating an anti-counterfeiting object according to one of claims 1 to 5, comprising:
reading the identification marking of the anti-counterfeiting object using a reading instrument in order to obtain information;
analyzing, by x-ray diffractometry, XRD, the authentication area of the anti-counterfeiting object in order to determine its XRD signature;
comparing the XRD signature of the anti-counterfeiting object with a reference XRD signature.

12. The method according to claim 11,
wherein said identification marking comprises information relative to said reference XRD signature, in particular regarding the positions and intensities of the characteristic peaks.

13. The method according to claim 11, wherein said reference XRD signature is obtained from a database.

14. A method for manufacturing an anti-counterfeiting object, wherein at least part of the object is manufactured by mixing, in a non-miscible manner, a first material, referred to as authentication material, and at least one second material so as to form an authentication volume, said authentication volume extending from a side of the object in the thickness (z) direction so as to be accessible from this side in order to be read by x-ray diffractometry, XRD, the authentication volume having an XRD signature resulting from the combination of the emissions of the two materials, and
the object also includes, on this side or another side, an optical identification marking (14) that is readable by the eye and/or by a machine; said optical identification marking indicating the authentication area or comprising information relative to the position of the authentication volume within the object;
and the authentication material comprises at least one amorphous phase, at least one crystalline phase and at least one complex metal phase;
wherein the first and second materials are added separately by additive construction using a filament of the authentication material and a filament of the second material to form the authentication volume, in which they are associated, juxtaposed and/or superimposed.
